# EUROPÄISCHE PATENTANMELDUNG

(11) **EP 3 015 825 A1**
(43) Veröffentlichungstag der Anmeldung: **04.05.2016**
(21) Anmeldenummer: 15185575.6
(22) Anmeldetag: 17.09.2015
(51) Int. Cl.: G01D 4/00

(54) **VORRICHTUNG ZUR ERFASSUNG EINES ZÄHLWERTES EINES MECHANISCHEN ZÄHLWERKS**

(30) Priorität: 30.10.2014 DE 102014015931
(71) Anmelder: RWE Effizienz GmbH, 44139 Dortmund (DE)
(72) Erfinder: Kemmann, Harald, 42555 Velbert (DE); Becker, Marc Oliver, 42853 Remscheid (DE)
(74) Vertreter: Cohausz & Florack

(57) **Zusammenfassung**

Vorrichtung zur Erfassung eines Zählwertes eines mechanischen Zählwerks umfassend ein Gehäuse 30, einen in dem Gehäuse 30 angeordneten optischen Durchlass 34, einer in dem Gehäuse 30 angeordneten Leiterplatte 32, und einen auf der Leiterplatte 32 angeordneten optischen Sensor 42, insbesondere einen Bildsensor. Eine gute optische Erkennbarkeit von Ziffern auf dem Zählwerk wird dadurch gewährleistet, dass der Bildsensor 42 auf einer dem optischen Durchlass 34 abgewandten Seite der Leiterplatte 32 angeordnet ist und dass zumindest ein Leuchtmittel 38 auf einer dem optischen Durchlass 36 zugewandten Seite der Leiterplatte 32 angeordnet ist.

## Beschreibung

Der Gegenstand betrifft eine Vorrichtung zur Erfassung eines Zählwertes eines mechanischen Zählwerks umfassend ein Gehäuse, einen in dem Gehäuse angeordneten optischen Durchlass, einer in dem Gehäuse angeordneten Leiterplatte, und einen auf der Leiterplatte angeordneten optischen Sensor, insbesondere einen Bildsensor,

Mechanische Zähler, insbesondere Energieverbrauchszähler sind hinlänglich bekannt. Im Stand der Technik sind solche Zähler für beispielsweise Strom, Gas und Wasser seit langem bekannt. Allen Zählern gemeinsam ist ein mechanisches Zählwerk. In diesem mechanischen Zählwerk werden Nummernscheiben (auch Zählscheiben, Zählräder, Nummernräder oder dergleichen genannt) über mechanische Zählimpulse angetrieben. Die Nummernscheiben sind entlang einer gemeinsamen Achse nebeneinander angeordnet. Ein Sichtfenster zeigt den aktuellen Zählstand (auch Zählwert genannt) derart an, dass die entlang des Sichtfensters horizontal entlang in etwa einer Gerade angeordneten, auf den Nummernscheiben angeordneten Ziffern einen aktuellen Zählwert repräsentieren.

Solche mechanischen Zähler müssen manuell ausgelesen werden. Das heißt, dass ein Mitarbeiter des Messstellenbetreibers oder des Energieversorgers regelmäßig, üblicherweise jährlich, den Zählstand ablesen muss. Dies kann auch nur stichprobenartig erfolgen. Zählstände können auch von Kunden selbst ausgelesen und mitgeteilt werden, doch ist eine Kontrolle stets notwendig. Dies führt zu erheblichen Verwaltungsaufwand.

Außerdem wird beispielsweise im Gas und/oder Strommarkt die Möglichkeit gefordert, laufend den Energieverbrauch erfassen zu können. Zum Einen soll dies dem Verbraucher Transparenz über seinen eigenen Energieverbrauch geben. Der Verbraucher soll stets den aktuellen Zählstand auslesen können. Außerdem sollen beispielsweise zeitabhängige Tarife eingeführt werden, die ein zeitabhängiges Ablesen/Erfassen eines Zählerstands notwendig machen.

Neben den genannten bestehen eine Vielzahl anderer Bedürfnisse, bestehende mechanische Zähler durch elektronische, intelligente Zähler auszutauschen. Bei mehr als 45 Millionen installierten mechanischen Elektrizitätszählern in der Bundesrepublik Deutschland ist ein solcher Austausch jedoch finanziell als auch von der notwendigen Installationszeit kaum darstellbar. Es müssen andere Möglichkeiten geschaffen werden, Energiemengenzähler elektronisch auslesen zu können.

Aus der deutschen Offenlegungsschrift DE 10 2010 053 019 A1 ist die Möglichkeit beschrieben, einen optischen Sensor an einem mechanischen Zähler anzuordnen. Hierzu wird der optische Sensor mittels einer Justiereinrichtung elektronisch an dem Zählwerk, insbesondere den Zählscheiben, ausgerichtet und anschließend auf der Scheibe des mechanischen Zählers verklebt. Nachteilig bei diesem Verfahren ist die aufwendige Elektronik, die zur Justierung des optischen Sensors an dem Zähler notwendig ist. Außerdem ist es nachteilig, dass die Erfassung der Ziffern des Zählers unter bestimmten Umweltbedingungen ungenau ist. Außerdem ist der optische Aufbau des Gehäuses komplex.

Daher lag dem Gegenstand die Aufgabe zugrunde, eine Vorrichtung zur Erfassung eines Zählwertes eines mechanischen Zählwerks zur Verfügung zu stellen, welche möglichst unabhängig von Umgebungsbedingungen stets eine gute Erkennbarkeit von Ziffern auf den Zählrädern des Zählwerks ermöglicht.

Diese Aufgabe wird durch eine Vorrichtung nach Anspruch 1 gelöst.

Zunächst ist erkannt worden, dass selbst der Austausch bestehender Zähler durch Zähler mit optischem Ausgang in einem realistischen Zeitrahmen nicht möglich ist. Darüber hinaus sind die Kosten für mechanische Zähler mit optischem Ausgang erheblich, sodass nicht davon ausgegangen werden kann, dass in naher Zukunft große Teile der installierten Zähler über optische Ausgänge verfügen. Zum Anderen wäre es bei einem ohnehin durchzuführenden Ausbau bestehender mechanischer Zähler durch solche mit optischem Ausgang durchaus möglich, diese Zähler direkt mit Kommunikationsschnittstellen zu versehen, um diese über Weitverkehrsnetze fernauslesbar zu machen.

Auf der anderen Seite ist erkannt worden, dass der Einbau als auch der Austausch eines optischen Sensors für einen mechanischen Zähler bedienerfreundlich sein muss, insbesondere durch jeden, auch handwerklich unbegabten Laien ausführbar sein muss.

Darüber hinaus ist auch erkannt worden, dass eine durch einen mechanischen Laien installierte Vorrichtung zum optischen Erfassen eines Zählwerts eines mechanischen Zählwerks zuverlässig den Zählwert auslesen können muss. Dies ist insbesondere vor dem Hintergrund von sich stark verändernden Umgebungsbedingungen eine zwingende Voraussetzung, insbesondere auch um zeitabhängige Tarife einführen zu können. Auch sind die installierten mechanischen Zähler mit unterschiedlichsten Zählwerken ausgestattet, so dass ein optisches Erkennen der Ziffern auf den Zählwerken und insbesondere den Nummernscheiben bei unterschiedlichsten Zählwerken sichergestellt sein muss. Dies erfordert ein sicheres Erkennen der Ziffern auf den Zählwerken.

Die Erfinder haben erkannt, dass es nicht ausreicht, lediglich mittels eines Bildsensors die Ziffern auf dem Zählwerk auszulesen. Vielmehr muss ein sicheres Auslesen unter verschiedensten optischen Umweltbedingungen ermöglicht werden. Hierzu wird vorgeschlagen, dass der Bildsensor auf einer dem optischen Durchlass abgewandten Seite der Leiterplatte angeordnet ist. Zusätzlich hierzu wird auf der dem optischen Durchlass zugewandten Seite der Leiterplatte zumindest ein Leuchtmittel angeordnet. Das Leuchtmittel führt dazu, dass durch den optischen Durchlass hindurch das Zählwerk des mechanischen Zählers künstlich beleuchtet werden kann. Durch das Anordnen des Bildsensors und der Leuchtmittel auf einander abgewandten Seiten der Leiterplatte ist es möglich, die Vorrichtung besonders kleinbauend zu gestalten. Insbesondere die Bautiefe wird hierdurch positiv beeinflusst. Darüber hinaus ist die integrierte Anordnung von Bildsensor und Leuchtmittel auf einer einzigen Leiterplatte fertigungstechnisch erheblich kostengünstiger, als eine Anordnung auf unterschiedlichen Leiterplatten.

Zusätzlich ist bei der Montage der Vorrichtung die die Optik und die Leuchtmittel beinhaltende Leiterplatte besonders einfach an einer Gehäuseinnenwand des Gehäuses zu montieren. Mit nur wenigen Fixierschrauben oder auch ausschließlich über eine Schnappverbindung kann die Leiterplatte in dem Gehäuse angeordnet werden und das optische Erfassen des Zählwertes ist bei zusammengebautem Gehäuse ermöglicht. Die gesamte Steuerelektronik für den Bildsensor als auch die Leuchtmittel kann auf der gemeinsamen Leiterplatte angeordnet sein. Eine aufwändige Verkabelung von Leuchtmitteln und/oder Lichtwellenleitern kann entfallen.

Im Fall eines Defektes ist der Austausch besonders einfach, da die Leiterplatte als Ganzes ausgetauscht werden kann. Es sind weder Anschlüsse für optische Lichtwellenleiter neu zu bestücken, noch ist eine Verdrahtung erforderlich.

Eine optimale Beleuchtung durch die Leuchtmittel ist insbesondere dann gegeben, wenn diese möglichst nahe an dem Zählwerk angeordnet sind. Aus diesem Grunde wird vorgeschlagen, dass die Leiterplatte an der Gehäuseinnenwand angeordnet ist, die den optischen Durchlass aufweist. Dies führt auch dazu, dass der optische Sensor, beispielsweise ein CCD-Sensor, eine Kamera oder dergleichen ebenfalls an der Gehäuseinnenwand angeordnet ist, die den optischen Durchlass aufweist.

Um zu ermöglichen, dass die von dem Zählwerk reflektierten Lichtstrahlen auch ungehindert auf den optischen Sensor auftreffen können, wird vorgeschlagen, dass die Leiterplatte eine an dem optischen Durchlass ausgerichtete Öffnung aufweist. Insbesondere ist die Öffnung der Leiterplatte in etwa kongruent zu der Öffnung des optischen Durchlasses. Zur Montage der Leiterplatte an dem Gehäuse sind Montagehilfen, insbesondere Führungen vorgesehen. Diese sind so angeordnet, dass im montierten Zustand der Leiterplatte an dem Gehäuse der optische Durchlass und die Öffnung der Leiterplatte im Wesentlichen übereinander liegen. Durch das Vorsehen einer Öffnung in der Leiterplatte wird es ermöglicht, dass die Leiterplatte um den optischen Durchlass umlaufend bestückt werden kann, insbesondere mit Leuchtmitteln.

Eine gute Ausleuchtung des Zählwerks ist notwendig für ein gutes optisches Erfassen der Ziffern auf dem Zählwerk. Die Leuchtmittel dienen zum Ausleuchten des Zählwerks. Ein besonders vorteilhaftes Ausleuchten des Zählwerks wird dann erreicht, wenn die Leuchtmittel im Bereich von zumindest zwei Innenkanten der Öffnung angeordnet sind. Vorzugsweise sind die Leuchtmittel entlang aller Innenkanten der Öffnungen angeordnet, sodass eine möglichst gleichmäßige Ausleuchtung des Zählwerks ermöglicht ist. Vorzugsweise sind die Leuchtmittel zumindest entlang einer Innenkante äquidistant voneinander angeordnet.

Die Umgebungsbedingungen können stark variieren. Insbesondere können Lichtverhältnisse an Zählwerken abhängig vom Einbauort höchst unterschiedlich sein. Darüber hinaus können sich die Lichtverhältnisse dynamisch ändern. Um diesen, stark variablen Lichtverhältnissen zu entgegnen und stets eine möglichst hinreichende Ausleuchtung des Zählwerks zu ermöglichen, wird vorgeschlagen, dass die Leuchtmittel entlang von zumindest einer Innenkante der Öffnung aus zumindest drei verschieden farbigen Einzelleuchten gebildet sind. Die Einzelleuchten können in einer beispielhaften Ausführungsform auch in nur einer Farbe ausgeführt sein. Durch die verschieden farbigen Einzelleuchten, insbesondere von solchen Leuchten, die durch optische Addition verschiedene Farben darstellen können, insbesondere durch eine Kombination von roten, gelben und blauen Leuchten" kann das Zählwerk stets optimal ausgeleuchtet werden. Insbesondere ist es durch Variation der Summenfarbe der Einzelleuchten möglich, stets einen gleichen Weißwert der Ziffern zu erzielen. Auch können die Ziffern der Zählwerke von unterschiedlichen Zählrädern ggf. in unterschiedlichen Farben sein. So kann es vorkommen, dass die Nachkommastellen des Zählwerks in roten Ziffern dargestellt sind und die Ziffern der Zählräder von Vorkommastellen in Weiß. Um den optischen Sensor eine Unterscheidung dieser beiden Farben der Ziffern zu ermöglichen, ist es notwendig, dass möglichst gleichbleibende Farbbedingungen am Zählwerk herrschen. Insbesondere kann durch Variation der Summenfarbe des von den Leuchtmitteln emittierten Lichtes auch die Farbe des von den Ziffern reflektierten Lichts beeinflusst werden. Insbesondere werden die Farben derart eingestellt, dass weiße Ziffern auch ein möglichst weißes Licht reflektieren. Hierbei kann ein Weißabgleich im optischen Sensor erfolgen und abhängig von diesem Abgleich kann ein Ansteuern der Einzelleuchten erfolgen, derart, dass der Weißwert von weißen Ziffern in einen Sollbereich geführt wird. Alternativ zur Variation der Summenfarben des von den Leuchtmitteln emittierten Lichtes, kann der Weißabgleich auch innerhalb des Sensors erfolgen. Ein Weißabgleich kann als Repräsentanz auf das Weiß jeweils einer der Ziffern erfolgen. Durch Farbmischung innerhalb des Sensors kann das Weiß jeweils einer Ziffer abgeglichen werden.

Eine besonders einfache Bestückung der Leiterplatte ist dann möglich, wenn die Leuchtmittel aus Leuchtdioden gebildet sind. Dies ist besonders kleinbauen dann möglich, wenn dies SMD (surface mounted devices) Leuchtdioden sind.

Eine weitere Möglichkeit der Einstellung des reflektierten Lichts der Ziffern ist die Variation der Farbtemperatur und/oder der Farbmischung der Leuchtmittel. Der optische Sensor kann beispielsweise zunächst die Farbe des reflektieren Licht einer Ziffer einer Zählscheibe erfassen. Vorzugsweise wird dabei beispielsweise eine Ziffer eines möglichst weit links angeordneten Zählrads gewählt, da dies in der Regel auch weiß sein sollte. Mit Hilfe der Farbe dieses reflektierten Lichts wird ein Weißabgleich durchgeführt und es wird überprüft, ob die Farbe des reflektierten Lichts in einem Sollbereich eines Weißwertes liegt. Durch Variation der Farbtemperatur und/oder der Farbmischung des emittierten Lichts abhängig von der erfassten Farbe des reflektierten Lichts und/oder Anpassung der Farbmischung innerhalb des Sensors kann die Farbe des reflektierten Lichts und/oder der vom Sensor aufgenommene und der dort interpretierte Weißwert variiert werden, sodass diese in einen Sollbereich eines Weißwertes geführt werden kann.

Um die Ziffern des Zählwerks optisch auf dem optischen Sensor abbilden zu können, wird vorgeschlagen, dass auf der dem optischen Durchlass gegenüberliegenden Seite des Gehäuses ein Reflektionsmittel angeordnet ist. Insbesondere ist das Reflektionsmittel an der Innenwand des Gehäuses angeordnet. Die Innenwand liegt der Innenwand gegenüber, an der der optische Durchlass angeordnet ist.

Um zusätzlich zu dem optischen Auslesen des Zählwerks eine manuelle Überprüfung zu ermöglichen, ist auf der dem optischen Durchlass gegenüberliegenden Innenseite des Gehäuses ein Sichtfenster angeordnet. Dieses Sichtfenster durchbricht die Wand des Gehäuses, sodass ein Blick durch das Sichtfenster durch den optischen Durchlass ermöglicht ist. Um diesen Blick möglichst ungehindert zu ermöglichen, wird vorgeschlagen, dass die Fläche des Sichtfensters im Bereich der Flächenormale des optischen Durchlasses angeordnet ist. Somit liegen Sichtfenster und optischer Durchlass an einander gegenüberliegenden Seitenwänden des Gehäuses.

Gemäß einem Ausführungsbeispiel wird vorgeschlagen, dass die Fläche des optischen Durchlasses größer ist als die Fläche des Sichtfensters. Um insbesondere Reflektionen von Streulicht und sonstige optische Beeinträchtigungen von Streulicht beim Auslesen des Zählwerks zu verhindern, sollte möglichst wenig Streulicht durch den optischen Durchlass auf das Zählwerk gelangen. Um diesen Einfluss zu minimieren, wird die Größe des Sichtfensters möglichst klein gewählt, insbesondere kleiner als die Größe des optischen Durchlasses. Dadurch ist der Anteil des Streulichts, welches durch das Sichtfenster und den optischen Durchlass auf das Zählwerk trifft, gering gehalten.

Gemäß einem Ausführungsbeispiel wird vorgeschlagen, dass der optische Durchlass und/oder das Sichtfenster aus einem transparenten Material gebildet sind. Hierdurch ist es möglich, das Innere des Gehäuses möglichst abzudichten, insbesondere gegenüber dem Eintritt von Staub oder Feuchtigkeit. Das transparente Material kann ein transparenter Kunststoff, beispielsweise Plexiglas oder auch eine herkömmliche Glasscheibe sein.

Da durch die Reflektion an den Reflektionsmitteln, insbesondere einem Spiegel, das mit dem Sensor erfasste Abbild des Zählwerks verzerrt ist, ist für eine sichere Erkennung der Ziffern vorgeschlagen, dass auf der Leiterplatte eine Entzerreinheit angeordnet ist. Diese Entzerreinheit kann vorzugsweise innerhalb des Prozessors abgebildet sein. Insbesondere ergibt sich, wenn die Reflektionsmittel eben sind, eine Trapezverzerrung, welche vorzugsweise durch die Entzerreinheit korrigiert wird.

Vorzugsweise ist die Vorrichtung lösbar an einem Befestigungsrahmen anordbar. Das Gehäuse weist Befestigungsmittel auf, die vorzugsweise zum lösbaren Befestigen an einem Befestigungsrahmen sind.

Der Befestigungsrahmen kann vorzugsweise haftend an dem Zähler befestigt werden. Durch eine geeignete Ausrichtung des Befestigungsrahmens an dem Zähler kann eine relative Position der Vorrichtung zu dem Zähler, insbesondere zu dem Zählwerk, definiert werden. Wird die Vorrichtung dann auf dem Befestigungsrahmen befestigt, insbesondere lösbar durch Aufschieben oder Aufstecken, ist gleichzeitig die relative Position der Vorrichtung und des darin verbauten optischen Sensors zu dem Zählwerk definiert.

Nachfolgend wird der Gegenstand anhand einer Ausführungsbeispiele zeigenden Zeichnung näher erläutert. In der Zeichnung zeigen:
- Fig. 1a: ein mechanisches Zählwerk eines Energiemengenzählers;
- Fig. 1b: eine Seitenansicht einer Zählscheibe eines solchen Zählwerks;
- Fig. 2a: einen Energiemengenzähler gemäß einem Ausführungsbeispiel;
- Fig. 2b: einen weiteren Energiemengenzähler gemäß einem Ausführungsbeispiel;
- Fig. 3a: eine schematische Schnittansicht eines Zählers;
- Fig. 3b: eine schematische Schnittansicht eines mit einer gegenständlichen Vorrichtung versehenen Zählers;
- Fig. 4a: eine Schnittansicht durch eine Leiterplatte gemäß einem Ausführungsbeispiel;
- Fig. 4b: eine Untersicht einer Leiterplatte gemäß einem Ausführungsbeispiel;
- Fig. 4c: eine Draufsicht auf eine Leiterplatte gemäß einem Ausführungsbeispiel;
- Fig. 5: eine schematische Schnittansicht durch eine Vorrichtung nach einem Ausführungsbeispiel.

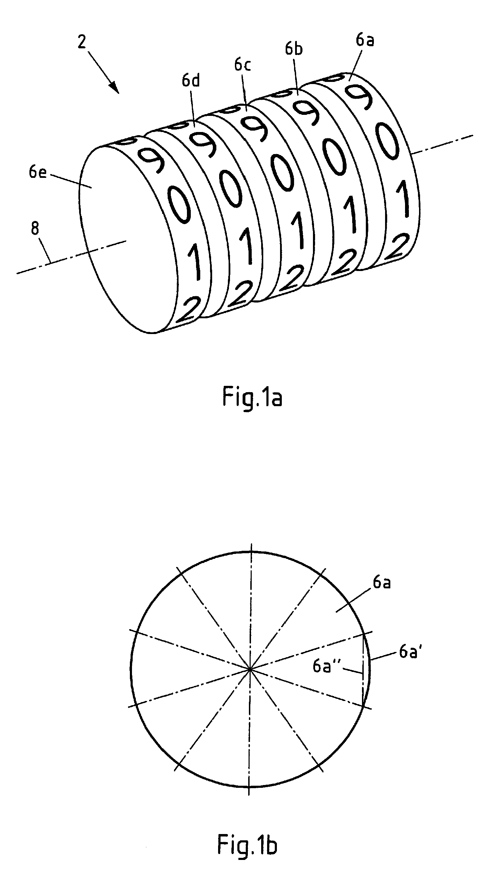

Energiemengenzähler, wie beispielsweise Stromzähler, Gaszähler, Wasserzähler oder dergleichen werden in herkömmlicher Weise mit einem mechanischen Zählwerk, wie es beispielhaft in Figur 1a dargestellt ist, betrieben. Das mechanische Zählwerk 2 wird über einen nicht dargestellten mechanischen Antrieb angetrieben. Der mechanische Antrieb übermittelt Zählimpulse von einem mechanischen oder elektromechanischen Sensor. Der Sensor erfasst beispielsweise eine Stromstärke, einen Volumenstrom oder dergleichen und gibt abhängig von den erfassten Werten mechanische Zählimpulse an das Zählwerk 2. Die Zählimpulse treiben die in dem Zählwerk 2 eingebauten Zählscheiben 6a-e mechanisch derart an, dass jede vollständige Umdrehung einer ersten Zählscheibe 6a zu einer 1/10 Drehung einer nachgelagerten Zählscheibe 6b führt. Hierdurch wird ein dezimales Zählsystem über die Zählscheiben 6a-e realisiert. Die Zählscheiben 6a-e rotieren um eine gemeinsame Drehachse 8.

Figur 1b zeigt eine Seitenansicht der Zählscheibe 6a. Die Zählscheibe 6a ist in zehn gleich große Winkelabschnitte 6a' unterteilt. In jedem der Winkelabschnitte 6a' ist eine Ziffer 0-9 aufgetragen. Der Bereich, in dem die Ziffer aufgetragen sein kann, ergibt sich aus der Länge der Sekante 6a" über den Kreisbogen 6a'. Bei einer vollständigen Umdrehung zeigt die Zählscheibe 6a jede Ziffer 0-9 genau einmal an.

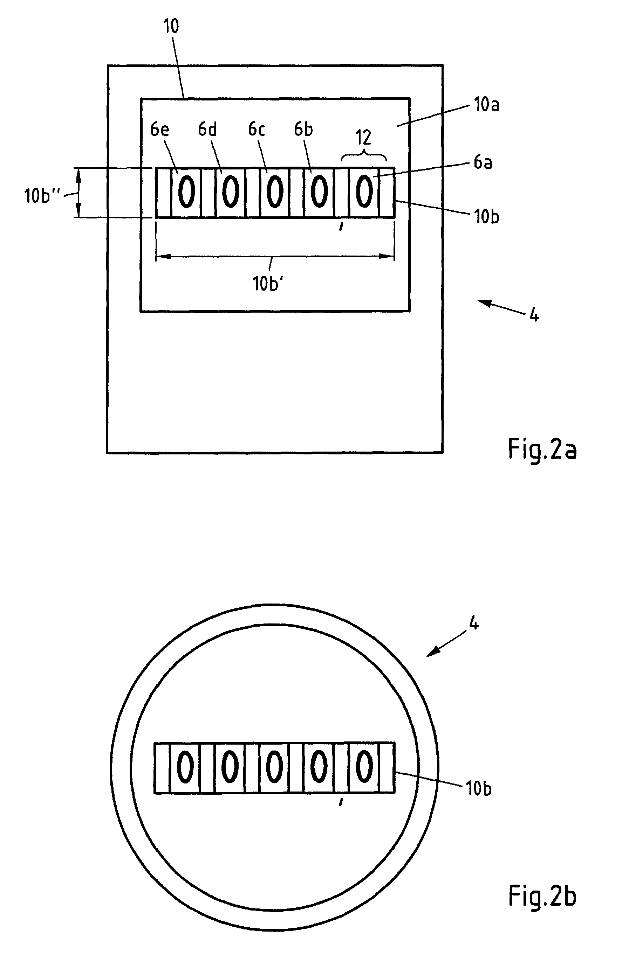

Das Zählwerk 2 wird in einem Zähler 4, wie in Figur 2a dargestellt ist, eingebaut. In dem Zähler 4 ist in der Regel eine Scheibe 10 aus einem bruchfesten Glas oder Plexiglas angeordnet. Durch die Scheibe 10 kann eine Blende 10a betrachtet werden. Die Blende 10a verdeckt das Zählwerk 2 bis auf ein Sichtfenster 10b. Das Sichtfenster 10b hat eine Breite 10b' in etwa entsprechend der Breite des Zählwerks 2. Die Höhe 10b" ist in der Regel in etwa entsprechend der Länge der Sekante 6a".Durch das Rotieren der Zählscheiben 6a-e werden bei einer vollständigen Umdrehung einer der Zählscheiben 6a-e in dem Sichtfenster 10b jeweils einmal die Ziffern 0-9 dieser Zählscheibe 6a-e dargestellt.

Zur Darstellung von Nachkommastellen des Zählwertes sind eine oder mehr Zählscheiben in einem insbesondere rot markierten Nachkommabereich 12 angeordnet. In der Figur 2a ist dies die Zählscheibe 6a, wohingegen die weiteren Zählscheiben 6b-e außerhalb des Nachkommabereichs 12 angeordnet sind. Bei einem Stromzähler wird in der Regel der Energieverbrauch in Kilowattstunden gemessen. Die erste Nachkommastelle löst den Verbrauch in Zehntel Kilowattstunden auf. Eine mögliche zweite oder dritte Nachkommastelle löst den Verbrauch entsprechend in 1/100 bzw. 1/1000 kWh auf. Bei einem Wasserzähler wird in der Regel die Durchflussmenge in Kubikmetern gemessen. Hierbei können ein, zwei oder drei Nachkommastellen den Verbrauch in Zehntel, Hundertstel oder Tausendstel Kubikmeter auflösen. Selbiges gilt natürlich auch für einen Gaszähler.

Zur besseren Markierung des Nachkommabereichs 12 ist es auch möglich, das die Ziffern auf der Zählscheibe 6a in einer anderen Farbe dargestellt sind als die Ziffern auf den anderen Zählscheiben, z.B. rot gegenüber weiß. Kann ein Bereich um die Ziffern der Nachkommastellen herum, im Bereich einer Blende ebenfalls andersfarbig, insbesondere rot abgesetzt sein.

Figur 2b zeigt eine schematische Ansicht eines weiteren möglichen Energiemengenzählers 4. Die Darstellung zeigt einen häufig verwendeten Gas- oder Wasserzähler 4. Auch hier ist ein Sichtfenster 10b an einem Zählwerk 2 angeordnet.

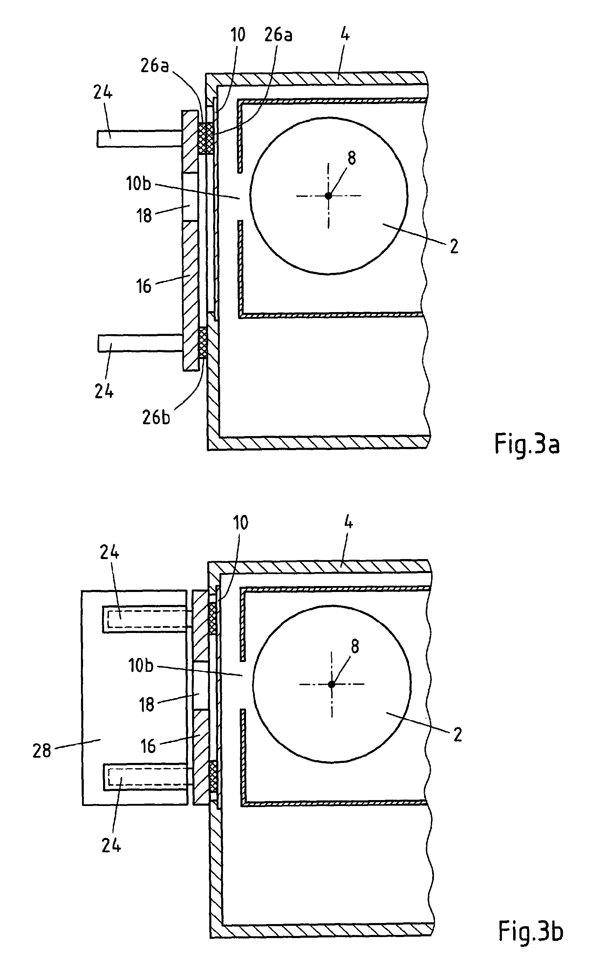

Nachdem ein Befestigungsrahmen 14 mittels Kalibriermarkierungen an dem Zähler 4 ausgerichtet wurde, kann dieser mittels Haftstreifen 26 an dem Zähler fixiert werden. Dies ist beispielsweise in der Figur 3a dargestellt. Die Figur 3a zeigt einen schematischen Schnitt durch einen Zähler 4. Zu erkennen ist das Zählwerk 2, welches durch eine Blende 10a gegenüber der Scheibe 10 teilweise verdeckt ist. Die Öffnung 18 einer Befestigungsrahmen 16 wird mittels Kalibriermarkierungen an dem Sichtfenster 10b ausgerichtet. Anschließend wird der Befestigungsrahmen 16 mit den Haftstreifen 26a, 26b gegen den Zähler 4 gedrückt und haftend an dem Zähler 4 befestigt. Zu erkennen ist, dass in dem in Figur 3a gezeigten Beispiel die Oberseite der Basisplatte 16 an der Scheibe 10 befestigt wird, wohingegen die Unterseite unmittelbar an dem Gehäuse des Zählers 4 befestigt wird und sich dadurch ein Höhenunterschied durch die Verblendung ergibt.

Im gezeigten Beispiel sind auf der Oberseite zwei Haftstreifen 26a übereinander angeordnet und auf der Unterseite ist nur ein Haftstreifen 26b vorgesehen. Dadurch ergibt sich ein Höhenausgleich, so dass die Basisplatte 16 in etwa parallel zu der Ebene der Scheibe 10 ausgerichtet werden kann.

Eine weitere Möglichkeit besteht darin, dass die Basisplatte 16 ausschließlich auf der Scheibe 10 befestigt wird, wie in der Figur 3b dargestellt ist. In diesem Fall wird an der Ober- als auch an der Unterseite jeweils die gleiche Anzahl an Haftstreifen 26, welche übereinander gestapelt sind, verwendet. In der Figur 3b ist auf Befestigungsmittel 24, die als Vorsprünge gebildet sind, eine Vorrichtung zur Erfassung eines Zählwertes 28 aufgeschoben. Die Vorrichtung 28 ist relativ zu der Öffnung 18 in der Basisplatte in einer festen, definierten Position. Da die Öffnung 18 durch die Kalibrierung mittels der Kalibriermarkierung zu dem Sichtfenster 10b der Blende 10a ausgerichtet ist, ist auch die Vorrichtung 28 zu der Blende 10a bzw. dem Sichtfenster 10b und mithin dem Zählwerk 2 ausgerichtet, sodass ein Auslesen der Ziffern auf den Zählscheiben 6a-e ermöglicht ist.

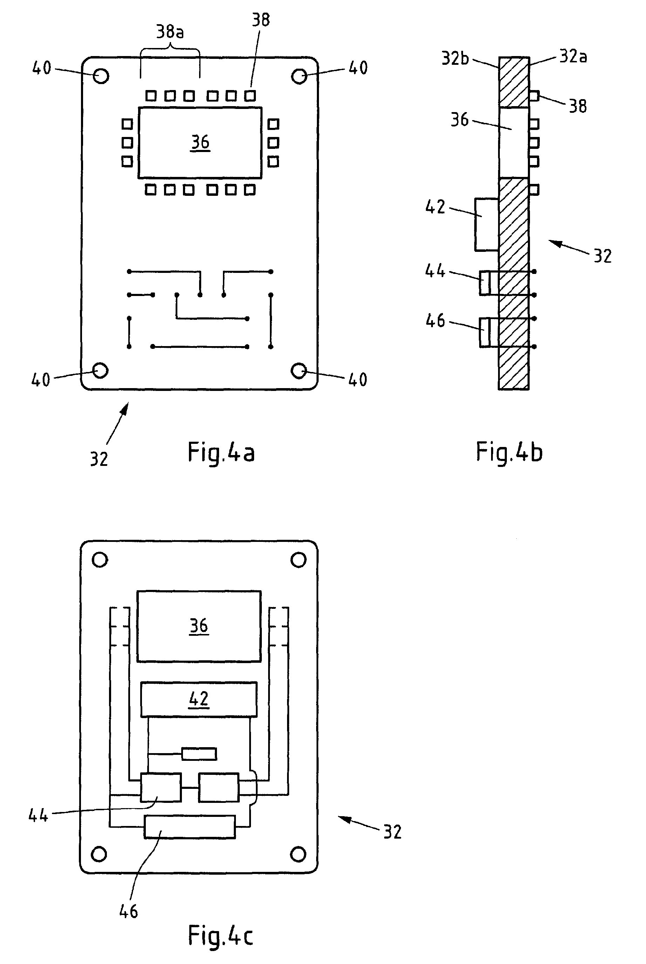

In einem Gehäuse 30 einer Vorrichtung 28 ist eine in den Figuren 4a - c dargestellte Leiterplatte 32 angeordnet. Die Leiterplatte 32 ist in einer Untersicht in Figur 4a dargestellt. Die in der Untersicht dargestellte Seite der Leiterplatte 32 ist im montierten Zustand innerhalb des Gehäuses 30 der Vorrichtung 28 in Richtung einer Durchlassöffnung 34 gerichtet. Zu erkennen ist, dass die Leiterplatte 32 eine Öffnung 36 aufweist. Die Öffnung 36 hat zumindest die gleiche Fläche wie eine Durchlassöffnung 34 in einem Gehäuse 30. An den Innenkanten der Öffnung 36 sind Leuchtmittel 38 angeordnet. Die Leuchtmittel 38 können aus Sätzen 38a gebildet aus jeweils drei Leuchtdioden entweder jeweils als Bauteil und/oder in einem gemeinsamen Gehäuse integriert gebildet sein. Die drei Leuchtdioden können verschiedene Farben, insbesondere Rot, Gelb und Blau aufweisen. Jeder Satz 38 lässt sich über geeignete, nicht gezeigte Steuermittel so ansteuern, dass die Farbe des durch einen Satz 38 emittierten Lichts in der Summenbildung variierbar ist. Zu erkennen ist, dass an den Längsseiten der Öffnung 36 mehr Sätze 38a an Leuchtdioden angeordnet sind als an den Querseiten.

Die Leiterplatte 32 ist auf der in Figur 4a gezeigten Seite nur gering bestückt, insbesondere ausschließlich mit den Sätzen 38a an Leuchtmittel 38.

Ferner weist die Leiterplatte 32 Aufnahmen 40 auf, um die Leiterplatte 32 an dem Gehäuse 30 zu fixieren. Die Aufnahmen 40 können entweder Öffnungen, z.B. Bohrungen sein, oder so gestaltet sein, dass sie in der Art einer Klick- oder Schnappverbindung mit entsprechenden Stiften an dem Gehäuse 30 der Vorrichtung 28 interagieren. Hierdurch lässt sich die Leiterplatte 32 an dem Gehäuse 30 verliersicher befestigen. Insbesondere lässt sich durch die Fixierung an den Aufnahmen 40 die Position der Leiterplatte 32 innerhalb des Gehäuses 30 der Vorrichtung 28 fest definieren. Dies ist insbesondere für eine gute optische Ausbeute notwendig, da die Position eines optischen Sensors relativ zu dem Zählwerk möglichst ortsfest definiert sein muss.

Figur 4b zeigt einen Schnitt durch die Leiterplatte 32. Zu erkennen ist, dass auf der Unterseite 32a die Leuchtmittel 38 angeordnet sind. Ferner ist zu erkennen, dass an einer Oberseite 32b ein optischer Sensor 42, insbesondere ein CCD-Sensor oder eine Kamera oder dergleichen angeordnet ist. Der optische Sensor 42 ist mit einer Entzerreinheit 44 und einem Mikroprozessor 46 verbunden. Diese Entzerreinheit kann auch als Routine innerhalb des Mikroprozessors ausgeführt sein. Über die Leiterplatte 32 steuert der Mikroprozessor 46 die Entzerreinheit 44, den optischen Sensor 42 und die Leuchtmittel 38 und/oder die Farbmischung innerhalb des Sensors entsprechend an. Insbesondere kann der Mikroprozessor 46 die Leuchtmittel 38 so ansteuern, dass das von den Ziffern des Zählwerks detektierte Bild einen definierten Weißbereich einhält.

Figur 4c zeigt die Oberseite 32b der Leiterplatte 32. Hier ist die Öffnung 36 erneut zu erkennen. Auch ist die Verdrahtung des optischen Sensors 42 mit dem Mikroprozessor 46 und der Entzerreinheit 44 schematisch dargestellt. Ferner ist auch die Verdrahtung des Mikroprozessors 46 mit den Leuchtmitteln 38 schematisch dargestellt.

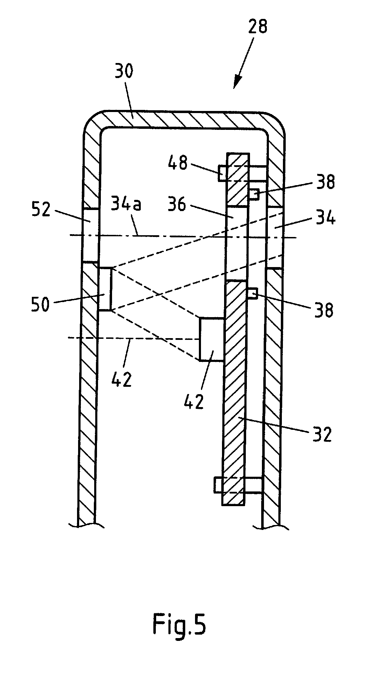

Die Leiterplatte 32 ist, wie in Figur 5 dargestellt, in dem Gehäuse 30 angeordnet. Hierbei ist die Leiterplatte 32 vorzugsweise mit der Unterseite 32a der Innenseite des Gehäuses 30 zugewandt, in welcher die Durchlassöffnung 34 angeordnet ist. Ferner sind Fixiermittel 48, die mit den Aufnahmen 40 interagieren derart an der Innenseite des Gehäuses 30 angeordnet, dass bei einer Montage der Leiterplatte 32 an dem Gehäuse 30 die Öffnung 36 mit der Durchlassöffnung 34 zumindest in Teilen fluchtet. Insbesondere liegt die gesamte Fläche der Durchlassöffnung 34 innerhalb der Fläche der Öffnung 36. Auch zu erkennen ist, dass durch die gezeigte Anordnung der Leiterplatte 32 mit der Seite 32a an der der Durchlassöffnung 34 zugewandten Innenseite die Leuchtmittel 38 ebenfalls der Durchlassöffnung 34 zugewandt sind. Über die Leuchtmittel 38 kann eine Beleuchtung des Zählwerks 2 des Zählers 4 erfolgen.

Ferner ist zu erkennen, dass ein Reflektionsmittel 50, insbesondere ein Spiegel, auf der Innenseite des Gehäuses 30 angeordnet ist, welche von der Durchlassöffnung 34 abgewandt ist. Insbesondere ist der Spiegel 50 äquidistant zu den Mittelachsen 34a der Durchlassöffnung 34 und 42a des optischen Sensors 42 angeordnet.

Schließlich ist in dem Gehäuse 30 ein Sichtfenster 52 angeordnet. Über das Sichtfenster 52 ist eine manuelle Kontrolle des Zählwerks 2 des Zählers 4 möglich. Die Fläche des Sichtfensters 52 liegt im Bereich der Mittelachse 34a, welche auch als Flächennormale zur Fläche der Durchlassöffnung 34 verstanden werden kann, angeordnet. Dadurch ist ein unmittelbarer Blick durch das Sichtfenster 32 und die Durchlassöffnung 34 auf den Zähler 4 und das Zählwerk 2 ermöglicht.

Sowohl das Sichtfenster 32 als auch die Durchlassöffnung 34 können aus einem optisch durchlässigen, insbesondere transparenten Material, insbesondere einem Feststoff, z.B. einem Kunststoff, insbesondere Plexiglas, aber auch aus Glas gebildet sein. Hierdurch wird sichergestellt, dass das Gehäuse 30 insbesondere gegenüber Staubeintritt verschlossen ist.

Das von den Leuchtmitteln 38 ausgestrahlte Licht wird von den auf dem Zählwerk 2 angeordneten Ziffern reflektiert. Das reflektierte Licht tritt durch die Durchlassöffnung 34 in das Gehäuse 30 ein und wird über den Spiegel 50 reflektiert. Das reflektierte Licht wird von dem Spiegel 50 auf den optischen Sensor 42 geleitet. Mittels des optischen Sensors 42 ist somit ein optisches Abbild der Ziffern des Zählwerks 2 detektierbar. Durch die Reflektion an dem Spiegel 50 kann eine Verzerrung des Bildes der Ziffern des Zählwerks 2 entstehen. Diese Verzerrung wird mittels der Entzerreinheit 44 aus dem erfassten Bild herausgerechnet. Dies ist insofern möglich, als das die relative Position des Spiegels 50 als auch des optischen Sensors 42 im Verhältnis zu der Durchlassöffnung 34 und somit auch im Verhältnis zu der Blende 10 des Zählwerks 2 bekannt ist. Die optische Verzerrung kann somit im Vornhinein bestimmt werden und die Entzerreinheit kann eine entsprechende Transformation des erfassten Bildes vornehmen.

Mit Hilfe der gezeigten Vorrichtung ist es möglich, Ziffern eines Zählwerks 2 eines Zählers 4 in besonders sicherer Weise zu erfassen. Die optischen Umgebungsbedingungen des Zählers 4 können durch geeignete Leuchtmittel 38 und/oder durch die Farbmischung innerhalb des Sensors und der weiterverarbeitenden Routinen normiert werden, sodass das von dem optischen Sensor 42 erfasste Bild, insbesondere die erfassten Farben des Bildes in einem Normbereich liegen. Durch Variation der Farbe und der Farbtemperatur der Leuchtmittel 38 kann das reflektierte Licht der Ziffern des Zählwerks 2 in seiner Farbe variiert werden. Hierdurch ist die optische Erkennung der Ziffern auf dem Zählwerk 2 gegenüber bekannten Verfahren stark verbessert.

## Patentansprüche

1. Vorrichtung zur Erfassung eines Zählwertes eines mechanischen Zählwerks umfassend:
- ein Gehäuse,
- einen in dem Gehäuse angeordneten optischen Durchlass,
einer in dem Gehäuse angeordneten Leiterplatte, und
- einen auf der Leiterplatte angeordneten optischen Sensor, insbesondere einen Bildsensor,
**dadurch gekennzeichnet,**
**dass** der optische Sensor auf einer dem optischen Durchlass abgewandten Seite der Leiterplatte angeordnet ist und
**dass** zumindest ein Leuchtmittel auf einer dem optischen Durchlass zugewandten Seite der Leiterplatte angeordnet ist.

2. Vorrichtung nach Anspruch 1,
**dadurch gekennzeichnet,**
**dass** die Leiterplatte an der den optischen Durchlass aufweisenden Gehäuseinnenwand angeordnet ist.

3. Vorrichtung nach Anspruch 1 oder 2,
**dadurch gekennzeichnet,**
**dass** die Leiterplatte eine im montierten Zustand an dem optischen Durchlass ausgerichtete Öffnung aufweist.

4. Vorrichtung nach einem der vorangehenden Ansprüche,
**dadurch gekennzeichnet,**
**dass** die Leuchtmittel im Bereich von zumindest zwei Innenkanten, vorzugsweise im Bereich einer jeden Innenkante der Öffnung angeordnet sind.

5. Vorrichtung nach einem der vorangehenden Ansprüche,
**dadurch gekennzeichnet,**
**dass** die Leuchtmittel entlang von zumindest zwei Innenkanten der Öffnung aus zumindest drei verschiedenfarbigen Einzelleuchten gebildet sind.

6. Vorrichtung nach einem der vorangehenden Ansprüche,
**dadurch gekennzeichnet,**
**dass** die Leuchtmittel aus Leuchtdioden gebildet sind, insbesondere aus SMD Leuchtdioden.

7. Vorrichtung nach einem der vorangehenden Ansprüche,
**dadurch gekennzeichnet,**
**dass** die Farbtemperatur und/oder die Farbmischung der Leuchtmittel einstellbar ist.

8. Vorrichtung nach einem der vorangehenden Ansprüche,
**dadurch gekennzeichnet,**
**dass** auf der dem optischen Durchlass gegenüberliegenden Innenseite des Gehäuses ein Reflektionsmittel angeordnet ist, derart, dass durch den optischen Durchlass eintretende Lichtstrahlen durch die Reflektionsmittel auf den Bildsensor reflektiert werden.

9. Vorrichtung nach einem der vorangehenden Ansprüche,
**dadurch gekennzeichnet,**
**dass** auf der dem optischen Durchlass gegenüberliegenden Innenseite des Gehäuses ein Sichtfenster angeordnet ist, insbesondere dass das Sichtfenster im Bereich der Flächennormalen des optischen Durchlass angeordnet ist.

10. Vorrichtung nach einem der vorangehenden Ansprüche,
**dadurch gekennzeichnet,**
**dass** die Fläche des optischen Durchlass größer ist als die Fläche des Sichtfensters.

11. Vorrichtung nach einem der vorangehenden Ansprüche,
**dadurch gekennzeichnet,**
**dass** der optische Durchlass und/oder das Sichtfenster aus einem transparenten Material, insbesondere transparentem Kunststoff, gebildet ist.

12. Vorrichtung nach einem der vorangehenden Ansprüche,
**dadurch gekennzeichnet,**
**dass** auf der Leiterplatte eine Entzerreinheit angeordnet ist, eingerichtet zum Durchführen einer Bildkorrektur des über die Reflektionsmittel reflektierten Bildes eines Zählwerks eines mechanischen Zählers.

13. Vorrichtung nach einem der vorangehenden Ansprüche,
**dadurch gekennzeichnet,**
**dass** das Gehäuse Befestigungsmittel eingerichtet zur Befestigung an einem Befestigungsrahmen aufweist.

14. Vorrichtung nach einer der vorangehenden Ansprüche,
**dadurch gekennzeichnet,**
**dass** das von dem Zählwerk in dem optischen Sensor erfasste Licht durch Variationen einer Farbmischung der Leuchtmittel und/oder durch Farbmischung innerhalb des Sensors in einem zuvor definierten Weißbereich geführt ist.
